# EUROPÄISCHE PATENTSCHRIFT

(11) **EP 1 038 403 B1**
(45) Veröffentlichungstag und Bekanntmachung des Hinweises auf die Patenterteilung: **12.10.2005**
(21) Anmeldenummer: 98962178.4
(22) Anmeldetag: 22.10.1998
(51) Int. Cl.: H04N 7/50, G06F 7/52

(54) **VORRICHTUNG ZUR MULTIPLIKATION MIT KONSTANTEN FAKTOREN UND DEREN VERWENDUNG ZUR VIDEOKOMPRESSION (MPEG)**
DEVICE FOR MULTIPLYING WITH CONSTANT FACTORS AND USE OF SAID DEVICE FOR VIDEO COMPRESSION (MPEG)
DISPOSITIF DE MULTIPLICATION PAR DES FACTEURS CONSTANTS ET SON UTILISATION EN COMPRESSION VIDEO (MPEG)

(30) Priorität: 19.12.1997 DE 19756827
(43) Veröffentlichungstag der Anmeldung: 27.09.2000
(73) Patentinhaber: Infineon Technologies AG, 81669 München (DE)
(72) Erfinder: SCHNEIDER, Claus, D-81739 München (DE)
(74) Vertreter: Reinhard - Skuhra - Weise & Partner
(86) Internationale Anmeldenummer: PCT/DE1998/003118
(87) Internationale Veröffentlichungsnummer: WO 1999/033276

(56) Entgegenhaltungen:
- DE-C- 19 618 117
- GB-A- 2 308 937
- BERNSTEIN R: "MULTIPLICATION BY INTEGER CONSTANTS" SOFTWARE PRACTICE & EXPERIENCE, Bd. 16, Nr. 7, Juli 1986, Seiten 641-652, XP000743393
- PATENT ABSTRACTS OF JAPAN vol. 006, no. 112 (P-124), 23. Juni 1982 & JP 57 041738 A (CASIO COMPUT CO LTD), 9. März 1982

## Beschreibung

Die Erfindung betrifft eine Vorrichtung zur Multiplikation mit einem konstanten Koeffizienten, bei der beispielsweise der Multiplikator in Form einer Verschiebezahl und einer weiteren Information verarbeitet wird.

Eine solche Vorrichtung ist aus den Proceedings zur IEEE-Konferenz ISCAS 85, Seiten 1389 und 1390, bekannt. Hierin wird ausgeführt, daß es für die Multiplikation mit konstanten Koeffizienten vorteilhaft sei den Multiplikator im CSD-Code derart zu speichern, daß die Steuereinheit die Schiebeanzahl und das Vorzeichen direkt von einem Koeffizientenspeicher ohne Umkodierung ausliest.

Eine solche Vorrichtung ist auch aus der GB-A-2 308 937 bekannt. Dabei wird der Faktor in einer bitreduzierten Multiplikationseinrichtung verarbeitet und der Verschiebeanteil in einer nachfolgenden Division berücksichtigt.

Die der Erfindung zugrundeliegende Aufgabe besteht nun darin, eine Vorrichtung zur Multiplikation mit einer Konstanten anzugeben, bei der die Verarbeitungsgeschwindigkeit möglichst groß ist.

Diese Aufgabe wird erfindungsgemäß durch die Merkmale des Anspruchs 1 gelöst. Die weiteren Ansprüche betreffen vorteilhafte Ausgestaltungen und eine vorteilhafte Verwendung.

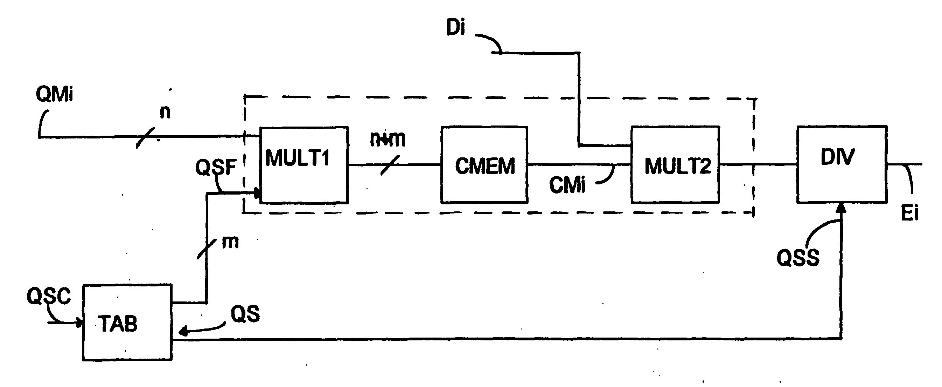

Die Erfindung wird nachfolgend anhand eines in der Zeichnung dargestellten Beispiels näher erläutert. Hierbei wird ein Multiplikand QMi der Wortbreite n und ein Faktoranteil QSF der Wortbreite m eines Multiplikators QS einer bitreduzierten Multiplikationseinrichtung mit den Bestandteilen MULT1, CMEM und MULT2 zugeführt, der eine Verschiebeeinrichtung DIV nachgeschaltet ist. Der Verschiebeeinrichtung DIV ist zusätzlich ein Verschiebeanteil QSS des Multiplikators QS zugeführt und liefert das Multiplikationsergebnis Ei. Der Faktoranteil QSF und der Verschiebeanteil QSS sind in einer Tabelle TAB einem Code QSC zugeordnet. Dies kann beispielsweise durch Speicherung der Werte QSF und QSS und Adressierung durch den Code QSC geschehen oder aber durch eine entsprechende Logik bzw. Verdrahtung.

Durch die Darstellung des Multiplikators QS in Form eines Faktoranteils und eines Verschiebeanteils können alle Bestandteile der bitreduzierten Multiplikationseiriheit in ihrer Wortbreite geringer ausgelegt werden, was insbesondere dann zu einer erheblichen Flächeneinsparung führt, wenn die bitreduzierte Multiplikationseinrichtung viele Bestandteile enthält und/oder wenn eine Verschiebeeinrichtung zur Multiplikation oder Division mit Potenzen der Zahl 2 ohnehin vorhanden ist. Der Fall der Division ist dabei besonders günstig , da der Verschiebeanteil eine Verschiebung in die entgegengesetzte Richtung bedeutet und die Verschiebeeinrichtung eventuell kleiner ausgelegt werden kann.

Damit die Tabelle TAB selbst besonders wenig Chipfläche benötigt ist es vorteilhaft, den Faktoranteil QSF möglichst in einfacher Weise aus dem Code QSC herzuleiten und den Verschiebeanteil QSS möglichst konstant zu wählen.

Nachfolgend ist in Tabelle 1 ein Beispiel für einen linearen Zusammenhang TYP0 zwischen dem Code QSC und dem Multiplikator QS und für einen nichtlinearen Zusammenhang TYP1 zwischen dem Code QSC und dem Multiplikator QS dargestellt. Hieraus wird deutlich, daß beim linearen Zusammenhang TYP0 idealerweise der Faktoranteil QSF dem Code QSC entspricht und für alle Multiplikatorwerte der Verschiebeanteil QSS konstant, zum Beispiel hier gleich 1, ist. Beim nichtlinearen Zusammenhang TYP1 sind eine Identität von QSF und QSC bis zur Ziffer 8 und lediglich drei verschiedene Werte für QSS erforderlich.

**Tabelle 1**

| QSC | Typ0 | | | Typ1 | | |
|---|---|---|---|---|---|---|
| | QS | QSF | QSS | QS | QSF | QSS |
| 0 | verboten | | | | | |
| 1 | 2 | 1 | 1 | 1 | 1 | 0 |
| 2 | 4 | 2 | 1 | 2 | 2 | 0 |
| 3 | 6 | 3 | 1 | 3 | 3 | 0 |
| 4 | 8 | 4 | 1 | 4 | 4 | 0 |
| 5 | 10 | 5 | 1 | 5 | 5 | 0 |
| 6 | 12 | 6 | 1 | 6 | 6 | 0 |
| 7 | 14 | 7 | 1 | 7 | 7 | 0 |
| 8 | 16 | 8 | 1 | 8 | 8 | 0 |
| 9 | 18 | 9 | 1 | 10 | 10 | 0 |
| 10 | 20 | 10 | 1 | 12 | 12 | 0 |
| 11 | 22 | 11 | 1 | 14 | 14 | 0 |
| 12 | 24 | 12 | 1 | 16 | 16 | 0 |
| 13 | 26 | 13 | 1 | 18 | 18 | 0 |
| 14 | 28 | 14 | 1 | 20 | 20 | 0 |
| 15 | 30 | 15 | 1 | 22 | 22 | 0 |
| 16 | 32 | 16 | 1 | 24 | 24 | 0 |
| 17 | 34 | 17 | 1 | 28 | 28 | 0 |
| 18 | 36 | 18 | 1 | 32 | 16 | 1 |
| 19 | 38 | 19 | 1 | 36 | 18 | 1 |
| 20 | 40 | 20 | 1 | 40 | 20 | 1 |
| 21 | 42 | 21 | 1 | 44 | 22 | 1 |
| 22 | 44 | 22 | 1 | 48 | 24 | 1 |
| 23 | 46 | 23 | 1 | 52 | 26 | 1 |
| 24 | 48 | 24 | 1 | 56 | 28 | 1 |
| 25 | 50 | 25 | 1 | 64 | 16 | 2 |
| 26 | 52 | 26 | 1 | 72 | 18 | 2 |
| 27 | 54 | 27 | 1 | 80 | 20 | 2 |
| 28 | 56 | 28 | 1 | 88 | 22 | 2 |
| 29 | 58 | 29 | 1 | 96 | 24 | 2 |
| 30 | 60 | 30 | 1 | 104 | 26 | 2 |
| 31 | 62 | 31 | 1 | 112 | 28 | 2 |

Alternativ hierzu kann die Tabelle TAB, wie beispielsweise die nachfolgende Tabelle 2, so ausgestaltet werden, daß für möglichst viele Multiplikatoren die Faktoranteile gleich sind. Dies hat zum Vorteil, daß die Verarbeitungsgeschwindigkeit vergrößert wird, da eine Neuberechnung in der bitreduzierten Multiplikationseinrichtung nur dann notwendig ist, wenn sich der Faktoranteil des Multiplikators ändert. Auch in Tabelle 2 ist wiederum beispielhaft eine Tabelle für einen linearen Zusammenhang Typ 0 zwischen dem Code QSC und dem Multiplikator QS und für einen nichtlinearen Zusammenhang TYP1 zwischen dem Code QSC und dem Multiplikator QS dargestellt.

**Tabelle 2**

| QSC | Typ0 | | | Typ1 | | |
|---|---|---|---|---|---|---|
| | QS | QSF | QSS | QS | QSF | QSS |
| 0 | verboten | | | | | |
| 1 | 2 | 1 | 1 | 1 | 1 | 0 |
| 2 | 4 | 1 | 2 | 2 | 1 | 1 |
| 3 | 6 | 3 | 1 | 3 | 3 | 0 |
| 4 | 8 | 1 | 3 | 4 | 1 | 2 |
| 5 | 10 | 5 | 1 | 5 | 5 | 0 |
| 6 | 12 | 3 | 2 | 6 | 3 | 1 |
| 7 | 14 | 7 | 1 | 7 | 7 | 0 |
| 8 | 16 | 1 | 4 | 8 | 1 | 3 |
| 9 | 18 | 9 | 1 | 10 | 5 | 1 |
| 10 | 20 | 5 | 2 | 12 | 3 | 2 |
| 11 | 22 | 11 | 1 | 14 | 7 | 1 |
| 12 | 24 | 3 | 3 | 16 | 1 | 4 |
| 13 | 26 | 13 | 1 | 18 | 9 | 1 |
| 14 | 28 | 7 | 2 | 20 | 5 | 2 |
| 15 | 30 | 15 | 1 | 22 | 11 | 1 |
| 16 | 32 | 1 | 5 | 24 | 3 | 3 |
| 17 | 34 | 17 | 1 | 28 | 7 | 2 |
| 18 | 36 | 9 | 2 | 32 | 2 | 4 |
| 19 | 38 | 19 | 1 | 36 | 9 | 2 |
| 20 | 40 | 5 | 3 | 40 | 5 | 3 |
| 21 | 42 | 21 | 1 | 44 | 11 | 2 |
| 22 | 44 | 11 | 2 | 48 | 3 | 4 |
| 23 | 46 | 23 | 1 | 52 | 13 | 2 |
| 24 | 48 | 3 | 4 | 56 | 7 | 3 |
| 25 | 50 | 25 | 1 | 64 | 4 | 4 |
| 26 | 52 | 13 | 2 | 72 | 9 | 3 |
| 27 | 54 | 27 | 1 | 80 | 5 | 4 |
| 28 | 56 | 7 | 3 | 88 | 11 | 3 |
| 29 | 58 | 29 | 1 | 96 | 6 | 4 |
| 30 | 60 | 15 | 2 | 104 | 13 | 3 |
| 31 | 62 | 31 | 1 | 112 | 7 | 4 |

Die Erfindung kann vorteilhafterweise in Vorrichtungen zur schnelleren Durchführung von Videokompressionsverfahren, wie beispielsweise MPEG, und dort beispielsweise zur inversen Quantisierung vorteilhaft verwendet werden.

Bei einer solchen inversen Quantisierung, müssen die Elemente Qmi einer Quantisierungsmatrix QM, mit beispielsweise 8 Bit Wortbreite, mit konstanten Faktoren QS, mit beispielsweise 7 Bit Wortbreite, multipliziert werden. Hierzu würde in konventioneller Technik ein 8 x 7 Bit Multiplizierer benötigt, der ein 15 Bit breites Ergebnis liefert, das in einem Cache-Speicher CMEM zwischengespeichert wird der ebenfalls 15 Bit breit sein müßte. Anschließend würden die Ausgangswerte CMi des Cache-Speichers CMEM mit Eingangsdaten Di die eine Wortbreite von 13 Bit aufweisen, multipliziert werden und es entstünde ein Ergebnis von 28 Bit Wortbreite.

Bei der inversen Quantisierung können nun mit Hilfe der Erfindung zum Beispiel nach Tabelle 1 der Faktorsanteil QSF mit 5 Bit und der Verschiebeanteil QSS mit 2 Bit angegeben werden, wodurch nur eine Multiplikation mit einer Wortbreite von 8 x 5 = 13 Bit durchgeführt werden muß und der Cache-Speicher CMEM ebenfalls nur diese verringerte Wortbreite aufweisen muß. Da beispielsweise beim MPEG1-Standard das Ergebnis noch durch die Zahl 16 bzw. bei MPEG2-Standard durch die Zahl 32 geteilt werden muß, was einer Rechtsverschiebung von 4 bis 5 Bits in der Einheit DIV entspricht, können die Verschiebewerte ohne wesentlichen Mehraufwand miteinander verrechnet und nur die resultierende Verschiebung durchgeführt werden.

## Patentansprüche

1. Vorrichtung zur Multiplikation eines binären Multiplikanden (QMi) mit konstanten Faktoren (QS) aus einer Anzahl von unterschiedlichen Faktoren mit folgenden Merkmalen:
a) einer Einrichtung (TAB), zur Speicherung von Faktoranteilen (QSF) und Verschiebeanteilen (QSS), wobei jedem konstanten Faktor (QS) ein jeweiliger Faktoranteil (QSF) und ein Verschiebeanteil (QSS) zugeordnet ist, und wobei der Verschiebeanteil (QSS) eine bestimmte Anzahl von binären Stellen angibt, um die der Faktoranteil (QSF) verschoben werden muss, um aus demselben den jeweiligen konstanten Faktor (QS) zu erzeugen;
b) einer bitreduzierten Multiplikationseinrichtung (MULT1, CMEM, MULT2), die den Multiplikanden (QMi) mit mindestens dem Faktoranteil (QSF) des jeweiligen konstanten Faktors (QS) multipliziert und ein Multiplikationsergebnis liefert; und
c) einer Verschiebeeinrichtung (DIV), die der bitreduzierten Multiplikationseinrichtung (MULT1, CMEM, MULT2) nachgeschaltet ist und der der Verschiebeanteil (QSS) zugeführt ist,
wobei die Verschiebeeinrichtung (DIV) das Multiplikationsergebnis der bitreduzierten Multiplikationseinrichtung (MULT1, CMEM, MULT2) um die durch den Verschiebeanteil angegebene bestimmte Anzahl von binären Stellen verschiebt, um das Endergebnis (Ei) der Multiplikation des binären Multiplikanden (QMi) mit dem jeweiligen konstanten Faktor (QS) zu liefern;
d) wobei eine Neuberechnung in der bitreduzierten Multiplikations einrichtung nur erfolgt, wenn sich der Faktoranteil (QSF) des konstanten Faktors (QS) andert;
e) wobei die bitreduzierte Multiplikationseinrichtung (MULT1, CHEM, MULT2) ein Cache-Speicher (CMEM) zum Zwischenspeichern des Multiplikationsergebnisses aufweist.

2. Vorrichtung nach Anspruch 1,
bei der die Einrichtung (TAB) durch einen Code (QSC), der einem jeweiligen Faktoranteil (QSF) und einem jeweiligen Verschiebeanteil (QSS) eines konstanten Faktors (QS) zugeordnet ist, angesteuert wird.

3. Vorrichtung nach Anspruch 2,
bei der die Einrichtung (TAB) für einen linearen Zusammenhang (TYP0) zwischen dem Code (QSC) und dem jeweiligen konstanten Faktor (QS) und für einen nichtlinearen Zusammenhang (TYP1) zwischen dem Code (QSC) und dem konstanten Faktor (QS) einem Code (QSC) einem jeweiligen Faktoranteil (QSF) und einen jeweiligen Verschiebeanteil (QSS) des konstanten Faktors (QS) gemäß der folgenden Tabelle zuordnet:
| QSC | Typ0 | | | Typ1 | | |
|---|---|---|---|---|---|---|
| | QS | QSF | QSS | QS | QSF | QSS |
| 0 | verboten | | | | | |
| 1 | 2 | 1 | 1 | 1 | 1 | 0 |
| 2 | 4 | 1 | 2 | 2 | 1 | 1 |
| 3 | 6 | 3 | 1 | 3 | 3 | 0 |
| 4 | 8 | 1 | 3 | 4 | 1 | 2 |
| 5 | 10 | 5 | 1 | 5 | 5 | 0 |
| 6 | 12 | 3 | 2 | 6 | 3 | 1 |
| 7 | 14 | 7 | 1 | 7 | 7 | 0 |
| 8 | 16 | 1 | 4 | 8 | 1 | 3 |
| 9 | 18 | 9 | 1 | 10 | 5 | 1 |
| 10 | 20 | 5 | 2 | 12 | 3 | 2 |
| 11 | 22 | 11 | 1 | 14 | 7 | 1 |
| 12 | 24 | 3 | 3 | 16 | 1 | 4 |
| 13 | 26 | 13 | 1 | 18 | 9 | 1 |
| 14 | 28 | 7 | 2 | 20 | 5 | 2 |
| 15 | 30 | 15 | 1 | 22 | 11 | 1 |
| 16 | 32 | 1 | 5 | 24 | 3 | 3 |
| 17 | 34 | 17 | 1 | 28 | 7 | 2 |
| 18 | 36 | 9 | 2 | 32 | 2 | 4 |
| 19 | 38 | 19 | 1 | 36 | 9 | 2 |
| 20 | 40 | 5 | 3 | 40 | 5 | 3 |
| 21 | 42 | 21 | 1 | 44 | 11 | 2 |
| 22 | 44 | 11 | 2 | 48 | 3 | 4 |
| 23 | 46 | 23 | 1 | 52 | 13 | 2 |
| 24 | 48 | 3 | 4 | 56 | 7 | 3 |
| 25 | 50 | 25 | 1 | 64 | 4 | 4 |
| 26 | 52 | 13 | 2 | 72 | 9 | 3 |
| 27 | 54 | 27 | 1 | 80 | 5 | 4 |
| 28 | 56 | 7 | 3 | 88 | 11 | 3 |
| 29 | 58 | 29 | 1 | 96 | 6 | 4 |
| 30 | 60 | 15 | 2 | 104 | 13 | 3 |
| 31 | 62 | 31 | 1 | 112 | 7 | 4 |

4. Vorrichtung nach einem der vorhergehenden Ansprüche,
bei der die nachgeschaltete Verschiebeeinheit (DIV) lediglich für eine Verschieberichtung ausgebildet ist.

5. Vorrichtung nach einem der vorhergehenden Ansprüche,
bei der die Einrichtung (TAB) eine Tabelle, eine Logik oder eine Verdrahtung aufweist.

6. Verwendung einer Vorrichtung nach einem der Ansprüche 2 bis 5 zur Videokompression,
bei der der Code (QSC) einer Eingangsgröße einer Quantisierungsskala (TAB) und die konstanten Faktoren (QS) jeweils einem durch die Eingangsgröße und die Quantisierungsskala (TAB) festgelegten Skalierungsfaktor entspricht,
bei dem die bitreduzierte Multiplikationseinrichtung aus einer Reihenschaltung eines ersten Multiplizierers (MULT1), dem Cache-Speicher (CMEM) und eines zweiten Multiplizierers (MULT2) besteht, wobei ein erster Eingang des ersten Multiplizierers (MULT1) mit einem Faktoranteil (QSF) des Skalierungsfaktors und ein zweiter Eingang des ersten Multiplizierers (MULT1) mit Werten einer Quantisierungsmatrix (QMi) versorgt ist und dem zweiten Multiplizierer (MULT2) zusätzlich Eingangsdaten (Di) zugeführt sind, und
bei dem die nachgeschaltete Verschiebeeinheit (DIV) eine Division durch eine Potenz der Zahl 2 durchführt, wobei dies abhängig vom Verschiebeanteil (QSS) des Skalierungsfaktors geschieht.

## Claims

1. Apparatus for multiplication of a binary multiplicand (QMi) by constant factors (QS) from a number of different factors, having the following features:
a) a device (TAB) for storage of factor elements (QSF) and shift elements (QSS), with each constant factor (QS) allocated a respective factor element (QSF) and a shift element (QSS) and with the shift element (QSS) indicating a specific number of binary digit locations through which the factor element (QSF) must be shifted in order to produce the respective constant factor (QS) from it;
b) a bit-reduced multiplication device (MULT1, CMEM, MULT2), which multiplies the multiplicand (QMi) by at least the factor element (QSF) of the respective constant factor (QS) and produces a multiplication result; and
c) a shift device (DIV), which is connected downstream from the bit-reduced multiplication device (MULT1, CMEM, MULT2) and which is supplied with the shift element (QSS),
with the shift device (DIV) shifting the multiplication result of the bit-reduced multiplication device (MULT1, CMEM, MULT2) through the specific number of binary digit locations indicated by the shift element, in order to produce the final result (Ei) of the multiplication of the binary multiplicand (QMi) by the respective constant factor (QS);
d) with a recalculation being carried out in the bit-reduced multiplication device only if the factor element (QSF) of the constant factor (QS) changes;
e) with the bit-reduced multiplication device (MULT1, CMEM, MULT2) having a cache memory (CMEM) for temporary storage of the multiplication result.

2. Apparatus according to Claim 1,
in which the device (TAB) is driven by a code (QSC) which is allocated to a respective factor element (QSF) and to a respective shift element (QSS) of a constant factor (QS).

3. Apparatus according to Claim 2,
in which the device (TAB) allocates to a code (QSC), for a linear relationship (TYP0) between the code (QSC) and the respective constant factor (QS), and for a nonlinear relationship (TYP1) between the code (QSC) and the constant factor (QS), a respective factor element (QSF) and a respective shift element (QSS) of the constant factor (QS) in accordance with the following table:
| QSC | Type0 | | | Type1 | | |
|---|---|---|---|---|---|---|
| | QS | QSF | QSS | QS | QSF | QSS |
| 0 | forbidden | | | | | |
| 1 | 2 | 1 | 1 | 1 | 1 | 0 |
| 2 | 4 | 1 | 2 | 2 | 1 | 1 |
| 3 | 6 | 3 | 1 | 3 | 3 | 0 |
| 4 | 8 | 1 | 3 | 4 | 1 | 2 |
| 5 | 10 | 5 | 1 | 5 | 5 | 0 |
| 6 | 12 | 3 | 2 | 6 | 3 | 1 |
| 7 | 14 | 7 | 1 | 7 | 7 | 0 |
| 8 | 16 | 1 | 4 | 8 | 1 | 3 |
| 9 | 18 | 9 | 1 | 10 | 5 | 1 |
| 10 | 20 | 5 | 2 | 12 | 3 | 2 |
| 11 | 22 | 11 | 1 | 14 | 7 | 1 |
| 12 | 24 | 3 | 3 | 16 | 1 | 4 |
| 13 | 26 | 13 | 1 | 18 | 9 | 1 |
| 14 | 28 | 7 | 2 | 20 | 5 | 2 |
| 15 | 30 | 15 | 1 | 22 | 11 | 1 |
| 16 | 32 | 1 | 5 | 24 | 3 | 3 |
| 17 | 34 | 17 | 1 | 28 | 7 | 2 |
| 18 | 36 | 9 | 2 | 32 | 2 | 4 |
| 19 | 38 | 19 | 1 | 36 | 9 | 2 |
| 20 | 40 | 5 | 3 | 40 | 5 | 3 |
| 21 | 42 | 21 | 1 | 44 | 11 | 2 |
| 22 | 44 | 11 | 2 | 48 | 3 | 4 |
| 23 | 46 | 23 | 1 | 52 | 13 | 2 |
| 24 | 48 | 3 | 4 | 56 | 7 | 3 |
| 25 | 50 | 25 | 1 | 64 | 4 | 4 |
| 26 | 52 | 13 | 2 | 72 | 9 | 3 |
| 27 | 54 | 27 | 1 | 80 | 5 | 4 |
| 28 | 56 | 7 | 3 | 88 | 11 | 3 |
| 29 | 58 | 29 | 1 | 96 | 6 | 4 |
| 30 | 60 | 15 | 2 | 104 | 13 | 3 |
| 31 | 62 | 31 | 1 | 112 | 7 | 4 |

4. Apparatus according to one of the preceding claims, in which the downstream shift unit (DIV) is designed for only one shift direction.

5. Apparatus according to one of the preceding claims, in which the device (TAB) has a table, logic or wiring.

6. Use of an apparatus according to one of Claims 2 to 5 for video compression,
in which the code (QSC) of an input variable corresponds to a quantization scale (TAB), and the constant factors (QS) each correspond to a scaling factor defined by the input variable and the quantization scale (TAB),
in which the bit-reduced multiplication device comprises a series circuit consisting of a first multiplier (MULT1), the cache memory (CMEM) and a second multiplier (MULT2), wherein a first input of the first multiplier (MULT1) is supplied with a factor element (QSF) of the scaling factor, and a second input of the first multiplier (MULT1) is supplied with values from a quantization matrix (QMi), and the second multiplier (MULT2) is also supplied with input data (Di), and
in which the downstream shift unit (DIV) carries out division by a power of the number 2, wherein this is done as a function of the shift element (QSS) of the scaling factor.

## Revendications

1. Dispositif pour la multiplication d'un multiplicande binaire (QMi) avec des facteurs constants (QS) à partir d'un nombre de facteurs différents avec les caractéristiques suivantes :
a) un dispositif (TAB) pour la mémorisation des parties facteur (QSF) et des parties décalage (QSS), une partie facteur correspondante (QSF) et une partie décalage (QSS) étant affectées à chaque facteur (QS) constant et la partie décalage (QSS) donnant un nombre déterminé de positions binaires duquel la partie facteur (QSF) doit être décalée, pour produire le facteur (QS) constant correspondant à partir de celle-la même;
b) un dispositif de multiplication réduit en bit (MULT1, CMEM, MULT2) qui multiplie le multiplicande (QMi) avec au moins la partie facteur (QSF) du facteur constant correspondant (QS) et livre un résultat de multiplication ; et
c) un dispositif de décalage (DIV), qui est connecté en aval du dispositif de multiplication réduit en bit (MULT1, CMEM, MULT2) et auquel la partie décalage (QSS) est envoyée, le dispositif de décalage (DIV) décalant le résultat de multiplication du dispositif de multiplication réduit en bit (MULT1, CMEM, MULT2) du nombre déterminé de positions binaires donné par la partie décalage pour fournir le résultat (Ei) de la multiplication du multiplicande binaire (QMi) avec le facteur constant respectif (QS) ;
d) un nouveau calcul n'ayant lieu dans le dispositif de multiplication réduit en bit que lorsque la partie facteur (QSF) du facteur constant (QS) change ;
e) le dispositif de multiplication réduit en bit (MULT1, CMEM, MULT2) comprenant une mémoire cache (CMEM) pour mémoriser temporairement le résultat de multiplication.

2. Dispositif selon la revendication 1,
dans lequel le dispositif (TAB) est activé par un code (QSC) qui est affecté à une partie facteur (QSF) correspondante et une partie décalage (QSS) correspondante d'un facteur (QS) constant.

3. Dispositif selon la revendication 2,
dans lequel le dispositif (TAB), pour un rapport linéaire (TYP0) entre le code (QSC) et le facteur (QS) constant correspondant et pour un rapport non linéaire (TYP1) entre le code (QSC) et le facteur constant (QS), affecte à un code (QSC) une partie facteur (QSF) correspondante et une partie décalage (QSS) correspondante du facteur constant (QS), selon le tableau suivant :
| QSC | Typ0 | | | Typ1 | | |
|---|---|---|---|---|---|---|
| | QS | QSF | QSS | QS | QSF | QSS |
| 0 | interdit | | | | | |
| 1 | 2 | 1 | 1 | 1 | 1 | 0 |
| 2 | 4 | 1 | 2 | 2 | 1 | 1 |
| 3 | 6 | 3 | 1 | 3 | 3 | 0 |
| 4 | 8 | 1 | 3 | 4 | 1 | 2 |
| 5 | 10 | 5 | 1 | 5 | 5 | 0 |
| 6 | 12 | 3 | 2 | 6 | 3 | 1 |
| 7 | 14 | 7 | 1 | 7 | 7 | 0 |
| 8 | 16 | 1 | 4 | 8 | 1 | 3 |
| 9 | 18 | 9 | 1 | 10 | 5 | 1 |
| 10 | 20 | 5 | 2 | 12 | 3 | 2 |
| 11 | 22 | 11 | 1 | 14 | 7 | 1 |
| 12 | 24 | 3 | 3 | 16 | 1 | 4 |
| 13 | 26 | 13 | 1 | 18 | 9 | 1 |
| 14 | 28 | 7 | 2 | 20 | 5 | 2 |
| 15 | 30 | 15 | 1 | 22 | 11 | 1 |
| 16 | 32 | 1 | 5 | 24 | 3 | 3 |
| 17 | 34 | 17 | 1 | 28 | 7 | 2 |
| 18 | 36 | 9 | 2 | 32 | 2 | 4 |
| 19 | 38 | 19 | 1 | 36 | 9 | 2 |
| 20 | 40 | 5 | 3 | 40 | 5 | 3 |
| 21 | 42 | 21 | 1 | 44 | 11 | 2 |
| 22 | 44 | 11 | 2 | 48 | 3 | 4 |
| 23 | 46 | 23 | 1 | 52 | 13 | 2 |
| 24 | 48 | 3 | 4 | 56 | 7 | 3 |
| 25 | 50 | 25 | 1 | 64 | 4 | 4 |
| 26 | 52 | 13 | 2 | 72 | 9 | 3 |
| 27 | 54 | 27 | 1 | 80 | 5 | 4 |
| 28 | 56 | 7 | 3 | 88 | 11 | 3 |
| 29 | 58 | 29 | 1 | 96 | 6 | 4 |
| 30 | 60 | 15 | 2 | 104 | 13 | 3 |
| 31 | 62 | 31 | 1 | 112 | 7 | 4 |

4. Dispositif selon l'une quelconque des revendications précédentes,
dans lequel l'unité de décalage (DIV) connectée en aval est seulement conçue pour une direction de décalage.

5. Dispositif selon l'une quelconque des revendications précédentes,
dans lequel le dispositif (TAB) comprend un tableau, une logique ou un câblage.

6. Utilisation d'un dispositif selon une des revendications 2 à 5 pour la compression vidéo,
dans lequel le code (QSC) correspond à une grandeur d'entrée d'une échelle de quantification (TAB) et les facteurs constants (QS) correspondent à chaque fois à un facteur d'échelle fixé par la grandeur d'entrée et l'échelle de quantification (TAB),
dans lequel le dispositif de multiplication réduit en bit comprend un montage en série d'un premier multiplieur (MULT1), de la mémoire cache (CMEM) et d'un deuxième multiplieur (MULT2), une première entrée du multiplieur (MULT1) étant alimentée avec une partie facteur (QSF) du facteur d'échelle et une deuxième entrée du premier multiplieur (MULT1) étant alimentée avec des valeurs d'une matrice de quantification (QMi), des données d'entrée (Di) étant, de plus, envoyées au deuxième multiplieur (MULT2) et,
dans lequel l'unité de décalage (DIV) connectée en aval exécute une division par une puissance du chiffre 2 en fonction de la partie décalage (QSS) du facteur d'échelle.
